# FASCICULE DE BREVET EUROPEEN

(11) **EP 3 995 200 B1**
(45) Date de publication et mention de la délivrance du brevet: **11.02.2026**
(21) Numéro de dépôt: 21206083.4
(22) Date de dépôt: 02.11.2021
(51) Int. Cl.: B01D 46/00, B01D 46/44

(54) **PROCÉDÉ ET DISPOSITIF DE VÉRIFICATION DU FONCTIONNEMENT D'UN FILTRE DE TRAITEMENT DE L'AIR D'UN BÂTIMENT PAR MESURE DE CONCENTRATION DE PARTICULES**
VERFAHREN UND VORRICHTUNG ZUR ÜBERPRÜFUNG DER FUNKTION EINES LUFTAUFBEREITUNGSFILTERS IN EINEM GEBÄUDE DURCH MESSUNG DER PARTIKELKONZENTRATION
METHOD AND DEVICE FOR CHECKING THE OPERATION OF A FILTER FOR TREATING AIR OF A BUILDING BY MEASURING PARTICLE CONCENTRATION

(30) Priorité: 04.11.2020 FR 2011298
(43) Date de publication de la demande: 11.05.2022
(73) Titulaire: Cylergie, 92930 Paris La Défense Cédex (FR)
(72) Inventeur: PETINGA, Priscilla, 92930 Paris La Défense Cédex (FR); PERRET, Igor Daniel, 92930 Paris La Défense Cédex (FR); RONGIER, Yannick, 92930 Paris La Défense Cédex (FR)
(74) Mandataire: Cabinet Beau de Loménie

(56) Documents cités:
- EP-A2- 3 190 349
- WO-A1-2014/089854
- US-A- 4 324 568
- US-A1- 2006 187 070

## Description

### Domaine Technique

La présente invention concerne les systèmes de filtration de l'air des bâtiments, et tout particulièrement la vérification du fonctionnement des filtres utilisés dans les réseaux aérauliques de traitement de l'air des bâtiments.

### Technique antérieure

Les bâtiments tels que les salles propres utilisées dans la fabrication des dispositifs à semi-conducteur, un niveau élevé de filtration de l'air est attendu. En effet, une particule unique peut générer un défaut qui entraine la destruction d'un lot entier de dispositifs.

Dans le domaine hospitalier, une contamination particulaire peut conduire à des risques sanitaires.

Il existe donc un besoin pour des filtres très efficaces et pour des méthodes qui permettent de vérifier que ces filtres fonctionnent de manière attendue.

Dans la présente demande, on appelle réseau aéraulique tout système dans lequel circule de l'air comprenant par exemple un ou plusieurs ventilateurs, une ou plusieurs gaines, etc. Dans un réseau aéraulique comprenant un filtre, le filtre peut être agencé dans un caisson ou dans une gaine. Un réseau aéraulique équipé d'un filtre peut comprendre une unique gaine dans laquelle un filtre est agencé ou un unique caisson dans lequel le filtre est agencé.

Dans l'art antérieur, le fonctionnement des filtres est vérifié en mesurant la perte de charge générée par le filtre. Cette vérification comprend la mesure, en amont et en aval par rapport au filtre de la pression de l'air circulant dans le réseau aéraulique où est placé le filtre. De la mesure de perte de charge, on peut déduire un niveau de colmatage du filtre. Cette information permet notamment d'estimer la durée de vie restante du filtre, par exemple en utilisant des tables préétablies qui lient le niveau de colmatage à la durée de vie restante.

Un inconvénient des mesures de perte de charge est qu'elles ne sont applicables que pour des systèmes qui fonctionnent avec un débit d'air constant dans le réseau où est placé le filtre (ou plus précisément dans le caisson ou la gaine où le filtre est agencé). Or, les centrales de traitement de l'air les plus récentes fonctionnent avec des débits d'air variables : seules des mesures ponctuelles sont possibles mais il n'est pas concevable de mettre en œuvre un suivi du colmatage et de la durée de vie pour un débit d'air variable.

Un autre inconvénient des mesures de perte de charge est qu'en cas de fuites dans le filtre (on parle également de défaut d'intégrité) ou de fuite dans l'installation du filtre (c'est-à-dire le montage du filtre), la perte de charge n'est pas représentative du colmatage du filtre (son encrassement).

D'autres méthodes sont connues, comme par exemple l'utilisation de compteurs optiques particulaires. Ces appareils ont pour inconvénient de ne pouvoir fonctionner qu'avec des filtres dont la face aval est accessible alors que le filtre est utilisé et traversé par de l'air. De ce fait, ces appareils sont plutôt appropriés pour des mesures ponctuelles, ce qui exclut la possibilité de mettre en œuvre un suivi en mesure continue. En outre, ils sont particulièrement onéreux. US 2006/187070 A1, EP 3 190 349 A2, WO 2014/089854 A1, US 4 324 568 A sont des documents pertinents issus de l'état de la technique.

Il existe donc un besoin pour des solutions qui permettent de vérifier le fonctionnement d'un filtre, qui ne présentent pas certains au moins des inconvénients précités.

### Exposé de l'invention

À cet effet, l'invention propose un procédé de vérification du fonctionnement d'au moins un filtre de traitement de l'air d'un bâtiment fixé dans un réseau aéraulique dans lequel circule de l'air à injecter dans le bâtiment, ledit au moins un filtre étant associé à un diamètre de particules pour lequel ledit au moins un filtre présente une efficacité minimale, le procédé comprenant :
a- un premier ensemble de mesures comprenant une première mesure en amont et une première mesure en aval dudit au moins un filtre d'une valeur représentative de la concentration en particules ayant un diamètre compris dans une première plage de diamètres de particules comprenant un ou plusieurs diamètres de particules, pour en déduire une première valeur d'efficacité dudit au moins un filtre, la première plage de diamètres de particules comprenant ledit diamètre de particules pour lequel ledit au moins un filtre présente une efficacité minimale,
b- une détermination de la présence de fuites au sein dudit au moins un filtre si la première valeur d'efficacité atteint un premier seuil d'efficacité minimale,
c- un deuxième ensemble de mesures comprenant une deuxième mesure en amont et une deuxième mesure en aval dudit au moins un filtre d'une valeur représentative de la concentration en particules ayant un diamètre compris dans une deuxième plage de diamètres de particules comprenant un ou plusieurs diamètres de particules, pour en déduire une deuxième valeur d'efficacité dudit au moins un filtre, la deuxième plage de diamètres comprenant au moins un diamètre supérieur auxdits un ou plusieurs diamètres compris dans la première plage de diamètres,
d- une détermination de la présence de fuites dans la fixation dudit au moins un filtre dans le réseau aéraulique si la deuxième valeur d'efficacité atteint un deuxième seuil d'efficacité minimale, dans lequel, si aucune fuite dans la fixation dudit au moins un filtre n'est présente, on répète les étapes c et d pour déterminer un niveau de colmatage dudit au moins un filtre, le niveau de colmatage étant obtenu en déterminant une variation temporelle de l'efficacité du filtre par comparaison entre une première et une deuxième valeurs d'efficacité préalablement mesurées.

Ce procédé peut être mis en œuvre par un système informatique auquel sont connectés des capteurs de concentration de particules.

Par exemple, la deuxième plage de diamètres est différente de la première plage de diamètres et il en découle que le premier ensemble de mesure est une étape distincte du deuxième ensemble de mesures.

Aussi, l'invention s'applique à la vérification du fonctionnement d'au moins un filtre de traitement ou à la vérification du fonctionnement d'une pluralité de filtres agencés successivement dans le réseau aéraulique (par exemple dans une même gaine ou dans un même caisson).

Dans la présente demande, la concentration peut être la concentration massique ou en nombre.

Les plages de diamètre peuvent être exprimées au moyen de la norme ISO-16890-1 dans sa version de 2016. Par exemple, on pourra utiliser les plages de diamètre qui suivent :
- PM10 : diamètre compris entre 0,3 et 10 µm ;
- PM2.5 : diamètre compris entre 0,3 et 2.5µm ;
- PM1 : diamètre compris entre 0,3 et 1 µm.

Les plages de particules peuvent également ne comprendre chacune qu'une seule valeur, ou plusieurs valeurs comprises dans une plage étroite centrée autour d'une seule valeur. Par exemple, une plage peut ne comporter qu'une valeur comprise dans le groupe comprenant 0,3µm, 0,5µm, 1µm, 2,5µm, et 5µm, ou une plage de valeurs centrée autour de ces valeurs (par exemple à plus ou moins une valeur donnée).

La première plage et la deuxième plage peuvent se chevaucher, ou non.

Les diamètres de particules, dans la présente demande, sont les diamètres dits aérodynamiques.

Dans la présente demande, l'expression mesure peut couvrir le cas où plusieurs sous-mesures sont mises en œuvre pour obtenir des valeurs représentatives d'une concentration. Par exemple, pour chaque plage, un capteur peut être utilisé pour mesurer des concentrations pour différents diamètres de particules, et la valeur représentative peut être obtenue par consolidation (typiquement une addition) de ces différentes concentrations. On peut noter que le premier ensemble de mesures et le deuxième ensemble de mesures peuvent être mises en œuvre simultanément ou successivement.

On notera que la détermination de la présence d'une fuite (au sein dudit au moins un filtre ou dans la fixation dudit au moins un filtre) peut conduire à l'élaboration d'un signal électrique ou d'un message électronique qui indique d'une telle fuite est présente.

Aussi, le diamètre de particules pour lequel ledit au moins un filtre présente une efficacité minimale est une donnée connue fournie généralement par les fabricants de filtres. On utilise également l'acronyme anglo-saxon « MPPS: Most Penetrating Particle Size » pour désigner cette taille de particule. A partir de cette taille de particule, on peut choisir une première plage et une deuxième plage de diamètres, tout en vérifiant que la deuxième plage contient des diamètres supérieurs à ceux de la première plage, ou au moins un diamètre supérieur à ceux de la première plage.

L'observation de l'efficacité pour la première plage permet donc de déterminer qu'une fuite est présente au sein du filtre, par exemple si sur la plage on observe une baisse de l'efficacité à un niveau plus bas qu'un niveau attendu pour le diamètre où l'efficacité est minimale.

La première plage de diamètres peut être choisie pour illustrer des micro-fuites, qui peuvent affecter le filtre lui-même, et qui ne seront visibles que si l'on observe l'efficacité du filtre pour cette première plage. Par contre, une fuite dans l'installation du filtre a généralement une section plus élevée qu'une fuite au sein d'un filtre, et en observant une plage de diamètres plus étendue que la première plage de diamètres (la deuxième plage de diamètres peut être plus étendue que la première plage de diamètres), on peut observer qu'une fuite est présente si l'efficacité sur toute cette plage est affectée.

En fait, les filtres sont généralement fixés et installés de manière étanche pour que tout l'air qui circule dans le réseau aéraulique soit filtré. Ainsi, on forme des joints à la périphérie des filtres. La deuxième valeur d'efficacité pourra donc indiquer, par une comparaison au deuxième seuil, si une fuite est présente dans l'installation du filtre.

Selon un mode de mise en œuvre particulier, on répète les étapes a et b, et/ou on répète les étapes c et d.

Cette répétition peut permettre de réaliser un suivi du fonctionnement du filtre et en particulier un suivi qui montrera l'apparition dans le temps des fuites. En fait, les répétitions seront réalisées à des instants différents.

Selon l'invention, on répète les étapes c et d pour déterminer un niveau de colmatage dudit au moins un filtre si aucune fuite dans la fixation dudit au moins un filtre n'est présente.

Ce niveau de colmatage correspond à un niveau d'encrassement du filtre, il pourra être exprimé de la même manière que les niveaux d'encrassements observés par les mesures de perte de charge. De ce fait, du niveau de colmatage/d'encrassement, on peut déduire la durée de vie du ou des filtres, par exemple à partir de tables données qui relient le niveau de colmatage à la durée de vie.

Selon un mode particulier de mise en œuvre, lesdites répétitions sont mises en œuvre de manière régulière.

Par exemple, on pourra les mettre en œuvre à une fréquence de l'ordre de quelques minutes, par exemple comprise entre 5 et 15 minutes.

Selon un mode de mise en œuvre particulier, on utilise un premier capteur pour mettre en œuvre la première mesure en amont et la deuxième mesure en amont, et on utilise un deuxième capteur pour mettre en œuvre la première mesure en aval et la deuxième mesure en aval.

Dans ce mode de mise en œuvre particulier, le premier et le deuxième capteurs sont distincts. Cela permet avantageusement d'approcher le plus possible chaque capteur de la région où il doit mesurer une concentration, et d'augmenter le rendement de collecte de chaque capteur.

Selon un mode de mise en œuvre particulier (qui est une alternative au mode de mise en œuvre qui précède), on utilise un capteur unique pour mettre en œuvre la première mesure en amont, la deuxième mesure en amont, la première mesure en aval, et la deuxième mesure en aval.

Ce mode de mise en œuvre particulier est avantageux en ce qu'il fait disparaître les biais de mesure qui peuvent apparaître si deux capteurs distincts sont utilisés. On peut noter que dans le mode de mise en œuvre qui utilise deux capteurs, une étape de calibration peut être mise en œuvre pour faire disparaître les biais de mesure.

Selon un mode de mise en œuvre particulier, la première plage de diamètres de particules est la plage PM1 et la deuxième plage de diamètres de particules est la plage PM10.

Il a été observé que ces plages de particules sont particulièrement appropriées pour illustrer d'une part la présence de fuites au sein du filtre (PM1) et d'autre part la présence de fuites dans l'installation du filtre (PM10).

Selon un mode de mise en œuvre particulier, on élabore un signal d'alerte s'il est déterminé qu'une fuite est présente au sein dudit au moins un filtre au cours de l'étape b et/ou s'il est déterminé qu'une fuite est présente dans la fixation dudit au moins un filtre dans le réseau aéraulique au cours de l'étape d.

Ce signal d'alerte peut être un signal électrique, ou encore un message électronique, ou encore un signal visuel sur une interface humain-machine.

Selon un mode de mise en œuvre particulier, on utilise un ou plusieurs capteurs de mesure de concentration fixés dans le bâtiment pour mettre en œuvre les mesures de l'étape a et/ou les mesures de l'étape c.

Par fixé, on entend que l'installation du ou des capteurs est permanente dans le bâtiment.

Aussi, dans ce mode particulier de mise en œuvre, et si un système informatique est utilisé, celui-ci peut être fixement lié au bâtiment au moins partiellement. La fixation du système informatique restant optionnelle, ce dernier pouvant être distant (par exemple dans un serveur distant).

Selon un mode de mise en œuvre particulier, dans lequel on utilise un ou plusieurs capteurs de mesure de concentration amovibles pour mettre en œuvre les mesures de l'étape a et/ou les mesures de l'étape c.

Par amovible, on entend que lorsque le ou les capteurs sont agencés pour effectuer des mesures de l'air qui circule dans le réseau aéraulique, ils peuvent être retirés sans destructions d'un joint, etc.

Par exemple, pour être réversible, le ou les capteurs peuvent être chacun équipés d'un organe de fixation utilisant une vis, un collier de serrage, etc. Cet organe de fixation peut être manuel et ne pas nécessiter d'outil, ou utiliser un outil pour par exemple serrer une vis ou un collier de serrage.

Selon un mode de mise en œuvre particulier, les mesures du premier ensemble de mesures sont mises en œuvre alors que l'air circule dans le réseau aéraulique à une vitesse donnée, et les mesures du deuxième ensemble de mesures sont mises en œuvre alors que l'air circule dans le réseau aéraulique à la vitesse donnée.

En fait, on pourra parler de mesures isocinétiques.

Par contre, si des répétitions sont mises en œuvre, elles pourront l'être à des vitesses différentes. L'invention est bien adaptée aux vitesses de circulation d'air variables.

L'invention propose également un système de vérification du fonctionnement d'au moins un filtre de traitement de l'air d'un bâtiment fixé dans un réseau aéraulique dans lequel circule de l'air à injecter dans le bâtiment, ledit au moins un filtre étant associé à un diamètre de particules pour lequel ledit au moins un filtre présente une efficacité minimale, le système comprenant :
au moins un capteur de mesure de concentration de particules dans l'air en amont et en aval du filtre,
un premier module d'obtention d'une valeur d'efficacité configuré pour mettre en œuvre un premier ensemble de mesures comprenant une première mesure en amont et une première mesure en aval dudit au moins un filtre d'une valeur représentative de la concentration en particules ayant un diamètre compris dans une première plage de diamètres de particules comprenant un ou plusieurs diamètres de particules, les mesures étant réalisées au moyen dudit au moins un capteur de mesure, et le premier module d'obtention d'une valeur d'efficacité étant en outre configuré pour déduire du premier ensemble de mesures une première valeur d'efficacité dudit au moins un filtre, la première plage de diamètres de particules comprenant ledit diamètre de particules pour lequel ledit au moins un filtre présente une efficacité minimale,
un premier module de détermination de la présence de fuites au sein dudit au moins un filtre si la première valeur d'efficacité atteint un premier seuil d'efficacité minimale,
un deuxième module d'obtention d'une valeur d'efficacité configuré pour mettre en œuvre un deuxième ensemble de mesures comprenant une deuxième mesure en amont et une deuxième mesure en aval dudit au moins un filtre d'une valeur représentative de la concentration en particules ayant un diamètre compris dans une deuxième plage de diamètres de particules comprenant un ou plusieurs diamètres de particules, les mesures étant réalisées au moyen dudit au moins un capteur de mesure, le deuxième module d'obtention d'une valeur d'efficacité étant en outre configuré pour déduire du deuxième ensemble de mesures une deuxième valeur d'efficacité dudit au moins un filtre, la deuxième plage de diamètres comprenant au moins un diamètre supérieur auxdits un ou plusieurs diamètres compris dans la première plage de diamètres,
un deuxième module de détermination de la présence de fuites dans la fixation dudit au moins un filtre dans le réseau aéraulique si la deuxième valeur d'efficacité atteint un deuxième seuil d'efficacité minimale.

Ce système pourra être configuré pour la mise en œuvre de tous les modes de mise en œuvre du procédé décrit ci-avant.

Selon un mode de réalisation particulier, le premier module de mesure et le deuxième module de mesure comportent des capteurs distincts.

Ce mode de réalisation particulier permet d'approcher le plus possible chaque capteur de la région où il doit mesurer une concentration, et d'augmenter le rendement de collecte de chaque capteur.

De manière alternative, le premier module de mesure et le deuxième module de mesure partagent au moins un capteur de mesure de concentration.

Ainsi, ledit au moins un capteur de mesure de concentration de particules dans l'air du premier module de mesure peut également être ledit au moins un capteur de mesure de concentration de particules dans l'air du deuxième module de mesure. Ce mode de réalisation alternatif est avantageux car il supprime les biais qui peuvent apparaître entre deux capteurs différents. L'amont et l'aval dudit au moins un filtre peuvent être connectés fluidiquement audit au moins un capteur de mesure commun aux deux modules.

Selon un mode de réalisation particulier, ledit au moins un capteur de mesure du premier module de mesure et/ou ledit au moins un capteur de mesure du deuxième module de mesure est fixé dans ledit bâtiment.

Selon un mode de réalisation particulier, ledit au moins un capteur de mesure du premier module de mesure et/ou ledit au moins un capteur de mesure du deuxième module de mesure est amovible par rapport au bâtiment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] La figure 1 est une représentation schématique d'un système selon un exemple.
[Fig. 2] La figure 2 est une représentation schématique d'un autre système selon un exemple.
[Fig. 3] La figure 3 illustre le colmatage d'un filtre.
[Fig. 4] La figure 4 représente les étapes d'un procédé selon un exemple.
[Fig. 5] La figure 5 est une représentation plus détaillée d'un module de traitement.

### Description des modes de réalisation

On va maintenant décrire un système et un procédé de vérification du fonctionnement d'un filtre de traitement de l'air d'un bâtiment. L'invention n'est néanmoins pas limitée à la vérification du fonctionnement d'un unique filtre mais concerne également les chaînes de filtres agencés les uns après les autres dans un réseau aéraulique, par exemple dans une même gaine ou dans un même caisson.

Ce système et ce procédé sont particulièrement bien adaptés pour détecter la présence de défauts d'étanchéité au sein du filtre et au sein de l'installation du filtre.

Lorsqu'un suivi est mis en place, par répétition des mesures, on pourra également obtenir une vérification quasi-continue du fonctionnement du filtre.

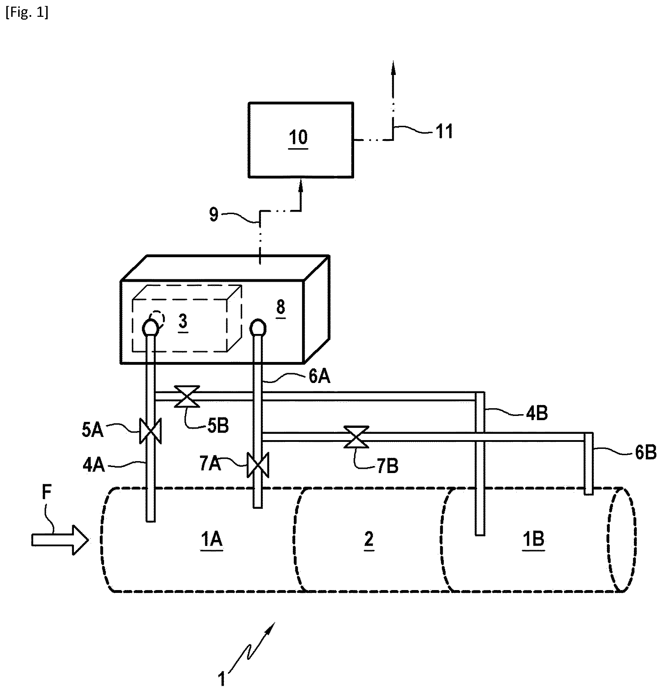

Sur la figure 1, on a représenté une gaine 1 dans laquelle circule de l'air dans un sens représenté par la flèche référencée F. Cette gaine est agencée dans un bâtiment non représenté, fait partie d'un réseau aéraulique, et peut faire partie d'un système de type centrale de traitement d'air. L'air qui circule dans la gaine sera injecté dans le bâtiment après filtrage au moyen d'un filtre 2 agencé dans la gaine 1 (on peut noter que l'invention s'applique également à des filtres agencés dans un caisson, par exemple). On notera que l'air qui circule dans la gaine peut provenir d'air repris du bâtiment, ou provenir de l'extérieur et être de l'air neuf. Par exemple, le filtre peut être un filtre commercialisé par la société suédoise CAMFIL sous la référence Opakfil ProSafe ES PS9 ePM1 80%, ou un filtre commercialisé par la société française DELTRIAN sous la référence F8 - ePM1 70% NW95-6/635/10, ou autres.

Le filtre contient des couches de matériau filtrant et un cadre (non représenté ici car connu en soi), et il est fixé dans la gaine. La fixation du filtre peut comprendre un joint d'étanchéité utilisé pour empêcher tout contournement du filtre par l'air qui circule dans la gaine.

De part et d'autre du filtre et en suivant le sens indiqué par la flèche F, une région amont de la gaine 1A est définie par rapport au filtre, et une région aval de la gaine 1B est définie par rapport au filtre.

Dans les solutions selon la technique antérieure, on mesure la perte de charge entre l'amont et l'aval par des mesures de pression pour observer le colmatage du filtre.

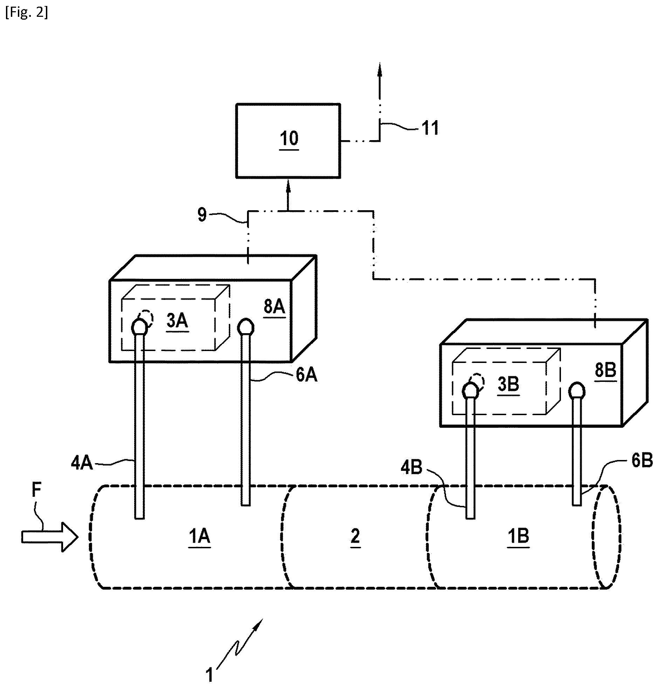

Ici, on va mesurer une concentration de particules contenues dans l'air circulant dans la gaine au moyen d'un capteur unique 3 de concentration de particules. A cet effet, on va utiliser un ensemble de tubes de prélèvement qui peuvent être installés de manière permanente. L'invention n'est néanmoins nullement limitée à l'utilisation d'un unique capteur de concentration de particules, et peut également s'appliquer à l'utilisation de deux capteurs, un pour mesurer des concentrations de particules dans la région amont 1A, et un pour mesurer des concentrations de particules dans la région aval 1B, comme cela sera décrit plus en détail en référence à la figure 2.

Un exemple de capteur adapté pour mettre en œuvre l'invention est le capteur commercialisé par la société TERA Sensor sous la dénomination NextPM. En fait, on utilisera préférentiellement des capteurs de concentration de particules dans des plages de diamètres allant de la plage PM1 à la plage PM10. Plus précisément, on utilise des capteurs de concentration qui mesurent des valeurs représentatives de la concentration en particules pour différentes plages, et notamment pour la plage qui comprend le diamètre de particules pour lequel le filtre présente une efficacité minimale.

Ici, un premier tube de prélèvement 4A est agencé pour recevoir de l'air qui provient de la région amont 1A, c'est-à-dire de l'air non-filtré. Le tube de prélèvement connecte de manière fluidique la région amont 1A avec une zone dans laquelle le capteur 3 peut mesurer une concentration de particules, et il est ici muni d'une électrovanne 5A passante lorsqu'une mesure de l'air amont doit être mise en œuvre. L'air qui a circulé vers le capteur peut être renvoyé dans la région amont par un tube de réinjection 6A en rendant passante une électrovanne 7A.

Pour la région aval 1B, on utilise un tube de prélèvement 4B qui est connecté par une jonction en T au tube de prélèvement 4A pour amener de l'air filtré depuis la région aval 1B vers le capteur 3. Le tube de prélèvement 4B est également muni d'une électrovanne 5B qui sera fermée si l'électrovanne 5A est passante. Pour la réinjection, on utilise un tube de réinjection 6B connecté par une jonction en T au tube de réinjection 6A pour renvoyer l'air dont on a mesuré la concentration en particules vers la région aval 1B. Le tube de réinjection 6B est également muni d'une électrovanne 7B.

Le capteur de concentration de particules est ici agencé dans un boîtier isobare 8 où débouchent le tube de prélèvement 4A et le tube de réinjection ou refoulement 6A. Ce boîtier isobare permet d'avoir un prélèvement plus représentatif de l'air dans la gaine, En effet, certains capteurs sont équipés d'une micro-pompe qui peut être influencée par la pression dynamique du réseau aéraulique. Si les entrées et sorties du capteur ne sont pas à la même pression, la pompe peut ne pas compenser cette différence de pression et de ce fait il est préférable d'utiliser le boîtier isobare.

le capteur délivre des signaux électroniques qui sont envoyés par communication filaire vers un système informatique, en charge de l'analyse des signaux élaborés par le capteur. Aussi, les capteurs peuvent être équipés d'un processeur pour mettre en œuvre un traitement ou un prétraitement des données mesurées. Par exemple, les capteurs peuvent eux-mêmes déterminer des valeurs d'efficacité.

Le capteur 3 est ici configuré pour délivrer, pour différentes plages de diamètres de particules, des valeurs représentatives de la concentration en particules ayant un diamètre compris dans chacune des différentes plages.

Les valeurs mesurées par le capteur sont ici communiquées par une liaison de communication 9 (filaire on sans-fil) à un module de traitement 10 ayant une structure analogue à celle d'un ordinateur, qui peut être distant ou non.

Le module de traitement 10 peut par ailleurs commander les électrovannes décrites ci-avant et le capteur 3, pour mettre en œuvre un procédé qui sera décrit plus en détail ci-après.

Le module de traitement est notamment configuré pour obtenir des valeurs d'efficacité pour le filtre et des plages de diamètres. A cet effet, pour une plage de diamètres de particules, le module de traitement détermine la différence entre la valeur représentative de la concentration aval et la valeur représentative de la concentration amont, différence ensuite divisée par la valeur représentative de la concentration amont. En d'autres termes, pour chaque plage de diamètres, en notant E la valeur d'efficacité, Cₐₘₒₙₜ la valeur représentative de la concentration amont, et Cₐᵥₐₗ la valeur représentative de la concentration aval, on a : E=(Cₐᵥₐₗ-Cₐₘₒₙₜ)/Cₐₘₒₙₜ.

Lorsque des fuites sont détectées en mettant en œuvre le procédé qui sera décrit ci-après, il est nécessaire d'élaborer un signal d'alerte 11. Ce signal d'alerte 11 peut être un signal électrique, un message électronique, et peut par exemple être visible sur une interface humain machine.

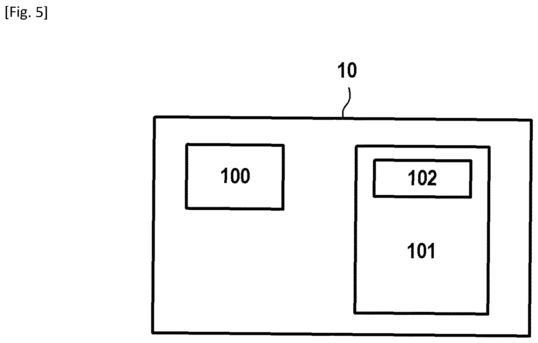

On peut noter que le module de traitement est configuré pour la mise en œuvre de ce procédé et sera décrit plus en détail en référence à la figure 5.

On notera que dans l'exemple illustré, on a un système qui est installé d'une manière telle (i.e. de manière permanente) qu'il est envisageable de mettre en place un suivi quasi-continu de la concentration de particules en amont et en aval du filtre. De ce fait, il est envisageable de suivre de manière quasi-continue l'efficacité du filtre. Cela permet de vérifier que le filtre fonctionne, et de savoir rapidement s'il ne fonctionne plus.

La configuration décrite en référence à la figure 1 a pour avantage de faire disparaitre les biais de mesures entre deux capteurs différents.

Cela étant, d'autres configurations encore plus avantageuses sont possibles.

Par exemple, sur la figure 2, on a représenté un système dans lequel on utilise un capteur 3A pour les mesures en amont, et un capteur 3B pour les mesures en aval.

Sur cette figure, les éléments qui portent les mêmes références que sur la figure 1 sont analogues, mais éventuellement adaptés pour l'utilisation de deux capteurs distincts. Les éléments référencés iA sont utilisés pour la région amont tandis que ceux référencés iB sont utilisés pour la région aval.

Puisqu'il y a ici deux capteurs 3A et 3B, on utilise également deux caissons isobares 8A et 8B. En outre, les tubes de prélèvement 4A et les tubes de refoulement 6A sont propres au capteur 3A, tandis que les tubes de prélèvement 4B et les tubes de refoulement 6B sont propres au capteur 3B. On comprend que les tubes de prélèvements peuvent être très courts, pour approcher les capteurs 3A et 3B respectivement des régions 1A et 1B. Cela a pour avantage d'augmenter le rendement de collecte des capteurs.

Aussi, dans le mode de réalisation illustré sur la figure 2, il n'est pas nécessaire d'utiliser des électrovannes alors que tel était le cas pour le mode de réalisation décrit en référence à la figure 1. La configuration de la figure 2 permet notamment de mettre en œuvre de manière simultanée des mesures en amont et en aval du filtre.

Dans les modes de réalisation des figures 1 et 2, des tubes de prélèvement sont utilisés. D'autres configurations sont possibles. En particulier, il est possible d'agencer un premier capteur directement dans la région amont 1A, et un deuxième capteur directement dans la région aval 1B, et ce sans utiliser de tubes de prélèvement.

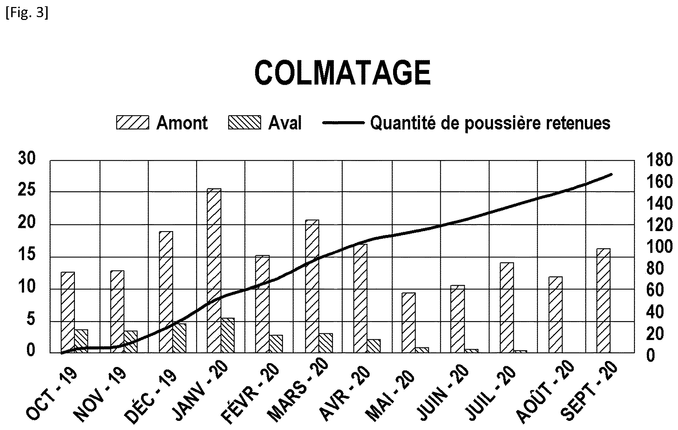

La figure 3, illustre le colmatage d'un filtre, représenté sur une durée de 12 mois par une courbe associée à la quantité de poussière retenue. Cette courbe est obtenue à partir des valeurs représentatives de la concentration en amont et en aval, par exemple pour la plage PM10, et un cumul de la quantité de poussière retenue est mis en œuvre pour obtenir la courbe.

On peut noter qu'un seuil peut être défini par calibration ou en fonction du type de filtres ou des données constructeur pour le colmatage, par exemple pour déclencher un changement de filtre, etc.

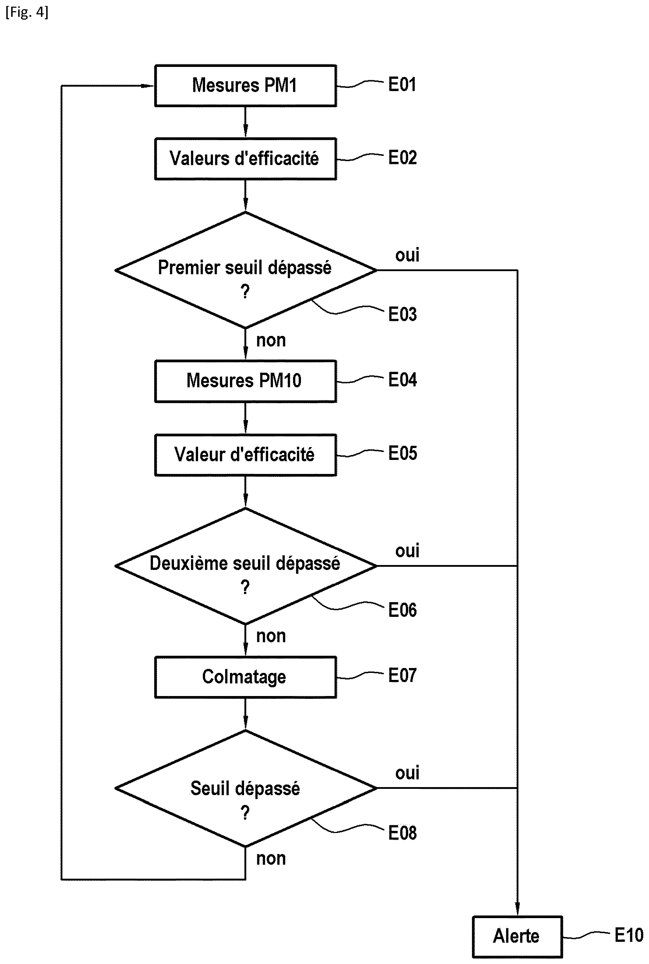

Sur la figure 4, on a représenté par un ordinogramme les étapes d'un procédé selon un exemple. Ce procédé est ici mis en œuvre au moyen du système décrit ci-avant en référence à la figure 1 ou en référence à la figure 2.

Dans une première étape E01, on met en œuvre un premier ensemble de mesures comprenant une première mesure en amont et une première mesure en aval du filtre 3. Plus précisément, si l'on utilise le système de la figure 1, on va rendre passantes l'électrovanne 5A et l'électrovanne 7A, et rendre bloquées les électrovannes 5B et 7B pour réaliser une mesure d'une valeur représentative de la concentration en particules de la plage PM1 en amont du filtre (éventuellement en mesurant la concentration en particules pour différentes tailles). Ensuite, on va rendre passantes les électrovannes 5B et 7B, et rendre bloquées les électrovannes 5A et 7A pour réaliser une mesure d'une valeur représentative de la concentration en particules de la plage PM1, en aval du filtre. Si par contre on utilise le système de la figure 2, sans électrovannes, on peut directement mettre en œuvre la mesure.

On peut ensuite mettre en œuvre l'étape E02 dans laquelle on en déduit une première valeur d'efficacité du filtre.

Cette première valeur d'efficacité permet de mettre en œuvre l'étape E03 dans laquelle on détermine si cette première valeur d'efficacité atteint un premier seuil d'efficacité minimale.

La valeur de ce seuil d'efficacité minimale peut par exemple être l'efficacité qui est attendue pour le diamètre de particules pour lequel le filtre a une efficacité minimale (valeur connue).

Si la première valeur d'efficacité atteint ce seuil d'efficacité minimale pour la plage PM1, alors il est déterminé qu'il y a une fuite au sein même du filtre (typiquement une micro-fuite dans laquelle passent les particules de la plage PM1).

Dans ce cas, on met alors en œuvre l'étape E10 d'alerte qui comprend l'émission d'un signal d'alerte tel que le signal 11 décrit en référence à la figure 1.

Si on utilise le système de la figure 1, et par exemple si aucune fuite au sein du filtre n'est détectée, on met en œuvre dans l'étape E04 un deuxième ensemble de mesures comprenant une deuxième mesure en amont et une deuxième mesure en aval du filtre 3. Plus précisément, on va rendre passantes l'électrovanne 5A et l'électrovanne 7A, et rendre bloquées les électrovannes 5B et 7B pour réaliser une mesure d'une valeur représentative de la concentration de particules de la plage PM10, en amont du filtre. Ensuite, on va rendre passantes les électrovannes 5B et 7B, et rendre bloquées les électrovannes 5A et 7A pour réaliser une mesure d'une valeur représentative de la concentration de particules de la plage PM10, en aval du filtre.

Si par contre on utilise le système de la figure 2, on peut mettre en œuvre la deuxième mesure en amont et la deuxième mesure de l'étape E04 en aval à tout moment et en particulier simultanément aux mesures de l'étape E01.

On peut ensuite mettre en œuvre l'étape E05 dans laquelle on en déduit une deuxième valeur d'efficacité du filtre.

Cette deuxième valeur d'efficacité permet de mettre en œuvre l'étape E06 dans laquelle on détermine si cette deuxième valeur d'efficacité atteint un seuil d'efficacité minimale.

Si la deuxième valeur d'efficacité atteint ce seuil d'efficacité minimale, alors il est déterminé qu'il y a une fuite dans la fixation du filtre dans la gaine.

Dans ce cas, on met alors en œuvre l'étape E10 d'alerte qui comprend l'émission d'un signal l'alerte tel que le signal 11 décrit en référence à la figure 1.

S'il n'y a pas de fuite, on met en œuvre l'étape E07 dans laquelle on met en œuvre une détermination d'un niveau de colmatage du filtre. Cette détermination peut être réalisée si les étapes E01 à E06 ont déjà été mises en œuvre. Ainsi, on peut comparer des valeurs d'efficacité déjà mesurées pour observer une variation dans le temps de l'efficacité et en déduire un niveau de colmatage, comme illustré à la figure 3.

On peut noter que l'étude du niveau de colmatage peut également être complétée ou affinée par une mesure de perte de charge, cette dernière n'étant bien entendu mise en œuvre qu'en l'absence de fuites.

Si le niveau de colmatage est supérieur à un seuil donné (étape E08), on met en œuvre l'étape E10 d'alerte. Sinon, on peut répéter les étapes E01 à E08, éventuellement après l'expiration d'un délai de 5 à 10 minutes.

Le procédé représenté à la figure 4 est présenté à titre indicatif. L'ordre des étapes peut être modifié et certaines étapes peuvent être réalisées de manière simultanée.

En particulier, les étapes de mesure E01 et E04 peuvent être mises en œuvre de manière simultanée (comme expliqué ci-avant, si l'on utilise le système de la figure 2), et on peut également mettre en œuvre les étapes E02, E03, E05, et E06 après que les deux étapes de mesure E01 et E04 aient été mises en œuvre.

La figure 5 est une représentation schématique plus détaillée du module de traitement 10 représenté à la figure 1.

Ce module de traitement a une structure analogue à celle d'un ordinateur. Il comporte un processeur 100 et une mémoire non-volatile 101 qui comporte des instructions de programme d'ordinateur pour mettre en œuvre le procédé décrit en référence à la figure 3.

En particulier, la mémoire non-volatile 101 comprend des instructions 102 qui, quand elles sont exécutées par le processeur 100, déclenchent la mise en œuvre des étapes E01 à E08 (et éventuellement E10).

Les instructions de programme d'ordinateur 102 forment, avec le processeur, quatre modules :
- un premier module d'obtention d'une valeur d'efficacité configuré pour mettre en œuvre un premier ensemble de mesures comprenant une première mesure en amont et une première mesure en aval dudit au moins un filtre d'une valeur représentative de la concentration en particules ayant un diamètre compris dans une première plage de diamètres de particules, les mesures étant réalisées au moyen du ou des capteurs de mesure, le premier module d'obtention d'une valeur d'efficacité étant en outre configuré pour déduire du premier ensemble de mesures une première valeur d'efficacité dudit au moins un filtre, la première plage de diamètres de particules comprenant ledit diamètre de particules pour lequel ledit au moins un filtre présente une efficacité minimale,
- un premier module de détermination de la présence de fuites au sein dudit au moins un filtre si la première valeur d'efficacité atteint un premier seuil d'efficacité minimale,
- un deuxième module d'obtention d'une valeur d'efficacité configuré pour mettre en œuvre un deuxième ensemble de mesures comprenant une deuxième mesure en amont et une deuxième mesure en aval dudit au moins un filtre d'une valeur représentative de la concentration en particules ayant un diamètre compris dans une deuxième plage de diamètres de particules, les mesures étant réalisées au moyen du ou des capteurs de mesure, le deuxième module d'obtention d'une valeur d'efficacité étant en outre configuré pour déduire du deuxième ensemble de mesures une deuxième valeur d'efficacité dudit au moins un filtre, la deuxième plage de diamètres comprenant des diamètres supérieurs aux diamètres compris dans la première plage de diamètres,
- un deuxième module de détermination de la présence de fuites dans la fixation dudit au moins un filtre dans la gaine si la deuxième valeur d'efficacité atteint un deuxième seuil d'efficacité minimale.

Les modes de mise en œuvre et de réalisation décrits ci-avant permettent de suivre le fonctionnement d'un filtre installé dans un réseau aéraulique de manière quasi-continue.

Ainsi, on peut garantir un niveau de qualité d'air attendue, et éviter des situations de contamination particulaire.

## Revendications

1. Procédé de vérification du fonctionnement d'au moins un filtre (2) de traitement de l'air d'un bâtiment fixé dans un réseau aéraulique (1) dans lequel circule de l'air à injecter dans le bâtiment, ledit au moins un filtre étant associé à un diamètre de particules pour lequel ledit au moins un filtre présente une efficacité minimale, le procédé comprenant :
a- un premier ensemble de mesures (E01) comprenant une première mesure en amont et une première mesure en aval dudit au moins un filtre d'une valeur représentative de la concentration en particules ayant un diamètre compris dans une première plage de diamètres de particules comprenant un ou plusieurs diamètres de particules, pour en déduire (E02) une première valeur d'efficacité dudit au moins un filtre, la première plage de diamètres de particules comprenant ledit diamètre de particules pour lequel ledit au moins un filtre présente une efficacité minimale,
b- une détermination (E03) de la présence de fuites au sein dudit au moins un filtre si la première valeur d'efficacité atteint un premier seuil d'efficacité minimale,
c- si aucune fuite n'est détectée, on met en œuvre un deuxième ensemble de mesures (E04) distinct du premier ensemble de mesures et comprenant une deuxième mesure en amont et une deuxième mesure en aval dudit au moins un filtre d'une valeur représentative de la concentration en particules ayant un diamètre compris dans une deuxième plage de diamètres de particules comprenant un ou plusieurs diamètres de particules, pour en déduire (E05) une deuxième valeur d'efficacité dudit au moins un filtre, la deuxième plage de diamètres comprenant au moins un diamètre supérieur auxdits un ou plusieurs diamètres compris dans la première plage de diamètres,
d- une détermination (E06) de la présence de fuites dans la fixation dudit au moins un filtre dans le réseau aéraulique si la deuxième valeur d'efficacité atteint un deuxième seuil d'efficacité minimale,
dans lequel, si aucune fuite dans la fixation dudit au moins un filtre n'est présente, on répète les étapes c et d pour déterminer (E07) un niveau de colmatage dudit au moins un filtre, le niveau de colmatage étant obtenu en déterminant une variation temporelle de l'efficacité du filtre par comparaison entre une première et une deuxième valeurs d'efficacité préalablement mesurées.

2. Procédé selon la revendication 1, dans lequel on répète les étapes a et b.

3. Procédé selon la revendication 1 ou 2, dans lequel lesdites répétitions sont mises en œuvre de manière régulière.

4. Procédé selon l'une quelconque des revendications précédentes, dans lequel on utilise un premier capteur pour mettre en œuvre la première mesure en amont et la deuxième mesure en amont, et on utilise un deuxième capteur pour mettre en œuvre la première mesure en aval et la deuxième mesure en aval.

5. Procédé selon l'une quelconque des revendications 1 à 4, dans lequel on utilise un capteur unique pour mettre en œuvre la première mesure en amont, la deuxième mesure en amont, la première mesure en aval, et la deuxième mesure en aval.

6. Procédé selon l'une quelconque des revendications 1 à 5, dans lequel la première plage de diamètres de particules est la plage PM1 et la deuxième plage de diamètres de particules est la plage PM10.

7. Procédé selon l'une quelconque des revendications 1 à 6, dans lequel on élabore un signal d'alerte (E10) s'il est déterminé qu'une fuite est présente au sein dudit au moins un filtre au cours de l'étape b et/ou s'il est déterminé qu'une fuite est présente dans la fixation dudit au moins un filtre dans le réseau aéraulique au cours de l'étape d.

8. Procédé selon l'une quelconque des revendications précédentes, dans lequel on utilise un ou plusieurs capteurs de mesure de concentration fixés dans le bâtiment pour mettre en œuvre les mesures de l'étape a et/ou les mesures de l'étape c.

9. Procédé selon l'une quelconque des revendications 1 à 7, dans lequel on utilise un ou plusieurs capteurs de mesure de concentration amovibles pour mettre en œuvre les mesures de l'étape a et/ou les mesures de l'étape c.

10. Procédé selon l'une quelconque des revendications 1 à 9, dans lequel les mesures du premier ensemble de mesures sont mises en œuvre alors que l'air circule dans le réseau aéraulique à une vitesse donnée, et les mesures du deuxième ensemble de mesures sont mises en œuvre alors que l'air circule dans le réseau aéraulique à la vitesse donnée.

11. Système de vérification du fonctionnement d'au moins un filtre (2) de traitement de l'air d'un bâtiment fixé dans un réseau aéraulique (1) dans lequel circule de l'air à injecter dans le bâtiment, ledit au moins un filtre étant associé à un diamètre de particules pour lequel ledit au moins un filtre présente une efficacité minimale, le système comprenant :
au moins un capteur de mesure de concentration de particules dans l'air en amont et en aval du filtre,
un premier module d'obtention d'une valeur d'efficacité configuré pour mettre en œuvre un premier ensemble de mesures comprenant une première mesure en amont et une première mesure en aval dudit au moins un filtre d'une valeur représentative de la concentration en particules ayant un diamètre compris dans une première plage de diamètres de particules comprenant un ou plusieurs diamètres de particules, les mesures étant réalisées au moyen dudit au moins un capteur de mesure, le premier module d'obtention d'une valeur d'efficacité étant en outre configuré pour déduire du premier ensemble de mesures une première valeur d'efficacité dudit au moins un filtre, la première plage de diamètres de particules comprenant ledit diamètre de particules pour lequel ledit au moins un filtre présente une efficacité minimale,
un premier module de détermination de la présence de fuites au sein dudit au moins un filtre si la première valeur d'efficacité atteint un premier seuil d'efficacité minimale,
un deuxième module d'obtention d'une valeur d'efficacité configuré pour, si aucune fuite n'est détectée, mettre en œuvre un deuxième ensemble de mesures distinct du premier ensemble de mesures et comprenant une deuxième mesure en amont et une deuxième mesure en aval dudit au moins un filtre des concentrations en particules ayant un diamètre compris dans une deuxième plage de diamètres de particules comprenant un ou plusieurs diamètres de particules, les mesures étant réalisées au moyen dudit au moins un capteur de mesure, le deuxième module d'obtention d'une valeur d'efficacité étant en outre configuré pour déduire du deuxième ensemble de mesures une deuxième valeur d'efficacité dudit au moins un filtre, la deuxième plage de diamètres comprenant au moins un diamètre supérieur auxdits un ou plusieurs diamètres compris dans la première plage de diamètres,
un deuxième module de détermination de la présence de fuites dans la fixation dudit au moins un filtre dans le réseau aéraulique si la deuxième valeur d'efficacité atteint un deuxième seuil d'efficacité minimale,
dans lequel, si aucune fuite dans la fixation dudit au moins un filtre n'est présente, on répète les étapes c et d pour déterminer (E07) un niveau de colmatage dudit au moins un filtre, le niveau de colmatage étant obtenu en déterminant une variation temporelle de l'efficacité du filtre par comparaison entre une première et une deuxième valeurs d'efficacité préalablement mesurées.

12. Système selon la revendication 11, dans lequel le premier module de mesure et le deuxième module de mesure comportent des capteurs distincts.

13. Système selon la revendication 11 ou 12, dans lequel ledit au moins un capteur de mesure du premier module de mesure et/ou ledit au moins un capteur de mesure du deuxième module de mesure est fixé dans ledit bâtiment.

14. Système selon l'une quelconque des revendications 11 à 13, dans lequel ledit au moins un capteur de mesure du premier module de mesure et/ou ledit au moins un capteur de mesure du deuxième module de mesure est amovible par rapport au bâtiment.

## Patentansprüche

1. Verfahren zur Überprüfung der Funktion mindestens eines Filters (2) zur Behandlung der Luft eines Gebäudes, der in einem lufttechnischen Netz (1) befestigt ist, in dem die in das Gebäude einzublasende Luft zirkuliert, wobei der mindestens eine Filter mit einem Partikeldurchmesser assoziiert ist, für den der mindestens eine Filter eine minimale Effizienz aufweist, das Verfahren umfassend:
a- eine erste Messreihe (E01), umfassend eine erste stromaufwärtige Messung und eine erste stromabwärtige Messung des mindestens einen Filters eines Werts, der repräsentativ für die Konzentration von Partikeln mit einem Durchmesser in einem ersten Bereich von Partikeldurchmessern ist, der einen oder mehrere Partikeldurchmesser umfasst, um daraus einen ersten Wert für die Effizienz des mindestens einen Filters abzuleiten (E02), wobei der erste Bereich von Partikeldurchmessern den Partikeldurchmesser umfasst, für den der mindestens eine Filter eine minimale Effizienz aufweist,
b- eine Bestimmung (E03) des Vorhandenseins von Lecks innerhalb des mindestens einen Filters, wenn der erste Effizienzwert einen ersten Schwellenwert für eine minimale Effizienz erreicht,
c- wobei, wenn kein Leck bestimmt wird, eine zweite Messreihe (E04) durchgeführt wird, die von der ersten Messreihe verschieden ist und eine zweite stromaufwärtige Messung und eine zweite stromabwärtige Messung des mindestens einen Filters eines Werts umfasst, der repräsentativ für die Konzentration von Partikeln ist, die einen Durchmesser aufweisen, der in einem zweiten Bereich von Partikeldurchmessern ist, der einen oder mehrere Partikeldurchmesser umfasst, um daraus einen zweiten Wert für die Effizienz des mindestens einen Filters abzuleiten (E05), wobei der zweite Bereich von Durchmessern mindestens einen Durchmesser umfasst, der größer ist als der eine oder die mehreren Durchmesser, die in dem ersten Bereich von Durchmessern enthalten sind,
d- eine Bestimmung (E06) des Vorhandenseins von Lecks in der Befestigung des mindestens einen Filters in dem lufttechnischen Netz, wenn der zweite Effizienzwert einen zweiten minimalen Effizienzschwellenwert erreicht,
wobei, wenn kein Leck in der Befestigung des mindestens einen Filters vorhanden ist, die Schritte c und d wiederholt werden, um einen Verstopfungsgrad des mindestens einen Filters zu bestimmen (E07), wobei der Verstopfungsgrad erlangt wird, indem eine zeitliche Veränderung der Effizienz des Filters durch Vergleich zwischen einem ersten und einem zweiten zuvor gemessenen Effizienzwert bestimmt wird.

2. Verfahren nach Anspruch 1, wobei die Schritte a und b wiederholt werden.

3. Verfahren nach Anspruch 1 oder 2, wobei die Wiederholungen regelmäßig implementiert werden.

4. Verfahren nach einem der vorherigen Ansprüche, wobei ein erster Sensor verwendet wird, um die erste stromaufwärtige Messung und die zweite stromaufwärtige Messung zu implementieren, und ein zweiter Sensor verwendet wird, um die erste stromabwärtige Messung und die zweite stromabwärtige Messung zu implementieren.

5. Verfahren nach einem der Ansprüche 1 bis 4, wobei ein einzelner Sensor verwendet wird, um die erste stromaufwärtige Messung, die zweite stromaufwärtige Messung, die erste stromabwärtige Messung und die zweite stromabwärtige Messung zu implementieren.

6. Verfahren nach einem der Ansprüche 1 bis 5, wobei der erste Bereich von Partikeldurchmessern der PM1-Bereich und der zweite Bereich von Partikeldurchmessern der PM10-Bereich ist.

7. Verfahren nach einem der Ansprüche 1 bis 6, wobei ein Warnsignal (E10) erarbeitet wird, wenn in Schritt b bestimmt wird, dass ein Leck in dem mindestens einen Filter vorhanden ist, und/oder in Schritt d bestimmt wird, dass ein Leck in der Befestigung des mindestens einen Filters in dem lufttechnischen Netz vorhanden ist.

8. Verfahren nach einem der vorherigen Ansprüche, wobei ein oder mehrere in dem Gebäude befestigte Sensoren zur Konzentrationsmessung verwendet werden, um die Messungen von Schritt a und/oder die Messungen von Schritt c durchzuführen.

9. Verfahren nach einem der Ansprüche 1 bis 7, wobei ein oder mehrere abnehmbare Sensoren zur Konzentrationsmessung verwendet werden, um die Messungen von Schritt a und/oder die Messungen von Schritt c durchzuführen.

10. Verfahren nach einem der Ansprüche 1 bis 9, wobei die Messungen der ersten Messreihe durchgeführt werden, während die Luft mit einer gegebenen Geschwindigkeit durch das lufttechnische Netz strömt, und die Messungen der zweiten Messreihe durchgeführt werden, während die Luft mit der gegebenen Geschwindigkeit durch das lufttechnischen Netz strömt.

11. System zur Überprüfung der Funktion mindestens eines Filters (2) zur Behandlung der Luft eines Gebäudes, der in einem lufttechnischen Netz (1) befestigt ist, in dem die in das Gebäude einzublasende Luft zirkuliert, wobei der mindestens eine Filter mit einem Partikeldurchmesser assoziiert ist, für den der mindestens eine Filter eine minimale Effizienz aufweist, das System umfassend:
mindestens einen Sensor zur Messung der Konzentration von Partikeln in der Luft vor und hinter dem Filter,
ein erstes Erlangungsmodul eines Effizienzwerts, das konfiguriert ist, um eine erste Messreihe zu implementieren, umfassend eine erste stromaufwärtige Messung und eine erste stromabwärtige Messung des mindestens einen Filters eines Werts, der repräsentativ für die Konzentration von Partikeln mit einem Durchmesser in einem ersten Bereich von Partikeldurchmessern ist, der einen oder mehrere Partikeldurchmesser umfasst, wobei die Messungen mittels des mindestens einen Messsensors durchgeführt werden, wobei das erste Erlangungsmodul eines Effizienzwerts ferner konfiguriert ist, um aus der ersten Messreihe einen ersten Effizienzwert des mindestens einen Filters abzuleiten, wobei der erste Bereich von Partikeldurchmessern den Partikeldurchmesser umfasst, für den der mindestens eine Filter eine minimale Effizienz aufweist,
ein erstes Bestimmungsmodul des Vorhandenseins von Lecks innerhalb des mindestens einen Filters, wenn der erste Effizienzwert einen ersten Schwellenwert für eine minimale Effizienz erreicht,
ein zweites Erlangungsmodul eines Effizienzwerts, das konfiguriert ist, um, wenn kein Leck erkannt wird, eine zweite Messreihe zu implementieren, die von der ersten Messreihe verschieden ist und eine zweite stromaufwärtige Messung und eine zweite stromabwärtige Messung des mindestens einen Filters der Konzentration von Partikeln umfasst, die einen Durchmesser aufweisen, der in einem zweiten Bereich von Partikeldurchmessern ist, der einen oder mehrere Partikeldurchmesser umfasst, wobei die Messungen mittels des mindestens einen Messsensors durchgeführt werden, wobei das zweite Erlangungsmodul eines Effizienzwerts ferner konfiguriert ist, um aus der zweiten Messreihe einen zweiten Effizienzwert des mindestens einen Filters abzuleiten, wobei der zweite Bereich von Durchmessern mindestens einen Durchmesser umfasst, der größer ist als der eine oder die mehreren Durchmesser, die in dem ersten Bereich von Durchmessern enthalten sind,
ein zweites Bestimmungsmodul des Vorhandenseins von Lecks in der Befestigung des mindestens einen Filters in dem lufttechnischen Netz, wenn der zweite Effizienzwert einen zweiten minimalen Effizienzschwellenwert erreicht,
wobei, wenn kein Leck in der Befestigung des mindestens einen Filters vorhanden ist, die Schritte c und d wiederholt werden, um einen Verstopfungsgrad des mindestens einen Filters zu bestimmen (E07), wobei der Verstopfungsgrad erlangt wird, indem eine zeitliche Veränderung der Effizienz des Filters durch Vergleich zwischen einem ersten und einem zweiten zuvor gemessenen Effizienzwert bestimmt wird.

12. System nach Anspruch 11, wobei das erste Messmodul und das zweite Messmodul separate Sensoren umfassen.

13. System nach Anspruch 11 oder 12, wobei der mindestens eine Messsensor des ersten Messmoduls und/oder der mindestens eine Messsensor des zweiten Messmoduls in dem Gebäude befestigt ist.

14. System nach einem der Ansprüche 11 bis 13, wobei der mindestens eine Messsensor des ersten Messmoduls und/oder der mindestens eine Messsensor des zweiten Messmoduls in Bezug auf das Gebäude abnehmbar ist.

## Claims

1. A method for verifying the operation of at least one filter (2) for treating the air of a building fixed in an air duct network (1) wherein air circulates to be injected into the building, said at least one filter being associated with a particle diameter for which said at least one filter presents a minimum efficiency, the method comprising:
a) a first set of measurements (E01) comprising a first measurement upstream and a first measurement downstream of said at least one filter of a value representative of the concentration of particles having a diameter included in a first range of particle diameters comprising one or more particle diameters, to deduce a first efficiency value (E02) of said at least one filter, the first range of particle diameters comprising said particle diameter for which said at least one filter presents a minimum efficiency,
b) a determination (E03) of the presence of leaks within said at least one filter if the first efficiency value reaches a first minimum efficiency threshold,
c) if no leak is detected, a second set of measurements (E04) is implemented, distinct from the first set of measurements and comprising a second measurement upstream and a second measurement downstream of said at least one filter of a value representative of the concentration of particles having a diameter included in a second range of particle diameters comprising one or more particle diameters, to deduce a second efficiency value (E05) of said at least one filter, the second range of diameters comprising at least one diameter greater than said one or more diameters included in the first range of diameters,
d) a determination (E06) of the presence of leaks in the fixation of said at least one filter in the air duct network if the second efficiency value reaches a second minimum efficiency threshold,
wherein, if no leak in the fixation of said at least one filter is present, repeating steps c and d to determine (E07) a clogging level of said at least one filter, the clogging level being obtained by determining a temporal variation of filter efficiency by comparison between a first and a second efficiency value previously measured.

2. The method according to claim 1, wherein steps a and b are repeated.

3. The method according to claim 1 or 2, wherein said repetitions are implemented regularly.

4. The method according to any one of the preceding claims, wherein a first sensor is used to implement the first upstream measurement and the second upstream measurement, and a second sensor is used to implement the first downstream measurement and the second downstream measurement.

5. The method according to any one of claims 1 to 4, wherein a single sensor is used to implement the first upstream measurement, the second upstream measurement, the first downstream measurement, and the second downstream measurement.

6. The method according to any one of claims 1 to 5, wherein the first range of particle diameters is the range PM1, and the second range of particle diameters is the range PM10.

7. The method according to any one of claims 1 to 6, wherein an alert signal (E10) is generated if it is determined that a leak is present within said at least one filter during step b and/or if it is determined that a leak is present in the fixation of said at least one filter in the air duct network during step d.

8. The method according to any one of the preceding claims, wherein one or more concentration measurement sensors fixed in the building are used to implement the measurements of step a and/or the measurements of step c.

9. The method according to any one of claims 1 to 7, wherein one or more removable concentration measurement sensors are used to implement the measurements of step a and/or the measurements of step c.

10. The method according to any one of claims 1 to 9, wherein the measurements of the first set of measurements are implemented while the air circulates in the air duct network at a given speed, and the measurements of the second set of measurements are implemented while the air circulates in the air duct network at the given speed.

11. A system for verifying the operation of the at least one filter (2) for treating the air of a building fixed in an air duct network (1) wherein air to be injected circulates in the building, said at least one filter being associated with a particle diameter for which said at least one filter presents a minimum efficiency, the system comprising:
at least one particle concentration measurement sensor in the air upstream and downstream of the filter,
a first module for obtaining an efficiency value configured to implement a first set of measurements comprising a first measurement upstream and a first measurement downstream of said at least one filter of a value representative of the concentration of particles having a diameter included in a first range of particle diameters comprising one or more particle diameters, the measurements being carried out by means of said at least one measurement sensor, the first module for obtaining an efficiency value being further configured to deduce from the first set of measurements a first efficiency value of said at least one filter, the first range of particle diameters comprising said particle diameter for which said at least one filter presents a minimum efficiency,
a first module for determining the presence of leaks within said at least one filter if the first efficiency value reaches a first minimum efficiency threshold,
a second module for obtaining an efficiency value configured to, if no leak is detected, implement a second set of measurements distinct from the first set of measurements and comprising a second measurement upstream and a second measurement downstream of said at least one filter of the concentrations of particles having a diameter included in a second range of particle diameters comprising one or more particle diameters, the measurements being carried out by means of said at least one measurement sensor, the second module for obtaining an efficiency value being further configured to deduce from the second set of measurements a second efficiency value of said at least one filter, the second range of diameters including at least one diameter greater than said one or more diameters included in the first range of diameters,
a second module for determining the presence of leaks in the fixation of said at least one filter in the air duct network if the second efficiency value reaches a second minimum efficiency threshold,
wherein, if no leak in the fixation of said at least one filter is present, repeating steps c and d to determine a clogging level(E07) of said at least one filter, the clogging level being obtained by determining a time variation of the filter efficiency by comparison between first and second efficiency values previously measured.

12. The system according to claim 11, wherein the first measurement module and the second measurement module include distinct sensors.

13. The system according to claim 11 or 12, wherein said at least one measurement sensor of the first measurement module and/or said at least one measurement sensor of the second measurement module is fixed in said building.

14. The system according to any one of claims 11 to 13, wherein said at least one measurement sensor of the first measurement module and/or said at least one measurement sensor of the second measurement module is removable relative to the building.
